# EUROPÄISCHE PATENTANMELDUNG

(11) **EP 4 663 970 A1**
(43) Veröffentlichungstag der Anmeldung: **17.12.2025**
(21) Anmeldenummer: 25181458.8
(22) Anmeldetag: 06.06.2025
(51) Int. Cl.: F16D 65/12

(54) **BREMSSCHEIBE, NABE UND BREMSSCHEIBENNABENSYSTEM**

(30) Priorität: 12.06.2024 DE 102024116447
(71) Anmelder: SAF-HOLLAND GmbH, 63856 Bessenbach (DE)
(72) Erfinder: Tukac, Petr, 63743 Aschaffenburg (DE)
(74) Vertreter: Müller Schupfner & Partner Patent- und Rechtsanwaltspartnerschaft mbB (Muc)

(57) **Zusammenfassung**

Bremsscheibe (1), insbesondere Bremsscheibe für ein Nutzfahrzeug, umfassend eine Anlagefläche (10) und eine Reibfläche (12), wobei die Bremsscheibe (1) dazu ausgelegt ist, um eine Rotationsachse (A) zu rotieren, wobei die Anlagefläche (10) schräg zur Rotationsachse (A) ausgebildet ist.

## Beschreibung

Die Erfindung betrifft eine Bremsscheibe, eine Nabe sowie ein System umfassend eine Bremsscheibe und eine Nabe.

Bremsscheiben und Naben sind bereits aus dem Stand der Technik bekannt. Problematisch bei den aus dem Stand der Technik bekannten Bremsscheiben und Naben ist jedoch, dass bei stark beanspruchten Bremsscheiben-Naben-Kombinationen, insbesondere bei Nutzfahrzeugen, eine besonders hohe Flächenpressung für eine ausreichend sichere Montage erforderlich ist. Daher müssen die Montageflächen ausreichend groß dimensioniert werden, sodass besonders große Bremsscheiben und Naben resultieren.

Es ist daher die Aufgabe der vorliegenden Erfindung, eine sichere Montage der Bremsscheibe an einer Nabe erreichen zu können, wobei jedoch nur ein geringer Bauraumbedarf resultiert.

Diese Aufgabe wird mit einer Bremsscheibe gemäß dem Anspruch 1, mit einer Nabe gemäß dem Anspruch 2 und mit einem System aus einer Bremsscheibe und einer Nabe gemäß dem Anspruch 15 gelöst. Weitere Merkmale, Ausführungsformen und Vorteile ergeben sich aus den Unteransprüchen, der Beschreibung sowie aus den Figuren.

Erfindungsgemäß ist eine Bremsscheibe, insbesondere eine Bremsscheibe für ein Nutzfahrzeug. Vorteilhafterweise umfasst die Bremsscheibe eine Anlagefläche und eine, bevorzugt zwei oder eine Vielzahl, Reibfläche(n), wobei die Bremsscheibe dazu ausgelegt ist, um eine Rotationsachse zu rotieren, wobei die Anlagefläche schräg zur Rotationsachse ausgebildet bzw. angeordnet ist. Die Anlagefläche der Bremsscheibe ist derjenige Bereich der Bremsscheibe, über welche die Bremsscheibe insbesondere axial, radial und/oder tangential fixiert wird bzw. ist, insbesondere an einer Radnabe, und/oder welche in einem montierten Zustand die Radnabe, welche auch als Nabe bezeichnet werden kann, kontaktiert. Daher kontaktiert die Anlagefläche vorteilhafterweise unmittelbar die Nabe bzw. Radnabe, insbesondere die Kontaktfläche bzw. die Kontaktflächen der Nabe. Zweckmäßigerweise kann die Bremsscheibe mehrere Anlageflächen aufweisen, wobei diese jeweils dazu ausgelegt sind, mit einer entsprechenden (Gegen-)Kontaktfläche einer Nabe bzw. einer Radnabe zu kontaktieren. Die Anlagefläche - jeweils alleine oder alle Anlageflächen in Summe - weist bzw. weisen bevorzugt eine Mindestfläche auf von 5 cm², 20 cm² und besonders bevorzugt von 25 cm² auf. Neben der Anlagefläche bzw. den Anlagenflächen verfügt die Bremsscheibe auch über zumindest eine Reibfläche. Diese Reibfläche ist bzw. sind diejenige(n) Fläche(n), welche dazu dient, mit einem Kontaktpartner derart zu kontaktieren, so dass auf die Bremsscheibe ein dissipatives Bremsmoment aufgebracht werden kann. Der Kontakt der Reibfläche mit einem Gegenreibpartner kann ein bremsendes Moment um die Rotationsache, um welche die Bremsscheibe rotiert und/oder rotieren kann, verursachen. Vorteilhafter Weise sind die Reibflächen dabei parallel zu einander angeordnet und/oder senkrecht zur Rotationsachse der Bremsscheibe bzw. der Nabe orientiert. Zweckmäßigerweise kann die Bremsscheibe mehrere Reibflächen aufweisen. Bevorzugt ist/sind die Normalen der Reibflächen oder der Reibfläche parallel zur Rotationsachse orientiert. Die Anlagefläche der Bremsscheibe ist zweckmäßigerweise schräg zur Rotationsachse ausgebildet. Unter einem schräg ist insbesondere zu verstehen, dass die nach außen weisende Normale der maßgeblichen Fläche in einem Winkel von ungleich 0°, 90° und 180° zu der Rotationsachse orientiert ausgebildet ist. Maßgeblich für die Beurteilung der Schrägheit der jeweiligen Anlagefläche ist insbesondere die gemittelte Normale der Fläche in einer Schnittebene. Die Schnittebene ist insbesondere auch von der Rotationsachse aufgespannt und/oder wobei die Schnittebene insbesondere auch den (Flächen-)Schwerpunkt der Anlagefläche oder der Bremsscheibe beinhaltet. Durch die Ausbildung dahingehend, dass die Anlagefläche, einige Anlageflächen oder sämtliche Anlageflächen der Bremsscheibe schräg ausgebildet sind, kann die zur Verfügung stehende Fläche gesteigert werden, um so die Flächenpressung zu reduzieren, wobei jedoch gleichzeitig ein nur geringer Bauraumbedarf in Richtung der Rotationsachse und darüber hinaus auch in radialer Richtung bzw. in Radialrichtung erreicht werden kann. Die Radialrichtung weist insbesondere senkrecht von der Rotationsachse weg. Die Rotationsachse, die Radialrichtung und eine Tangentialrichtung können ein Zylinderkoordinatensystem miteinander ausbilden.

Ein weiterer Aspekt der Erfindung kann eine Nabe, insbesondere eine Radnabe, umfassend eine Kontaktfläche zur Anlage einer Bremsscheibe, insbesondere einer Bremsscheibe wie vorhergehend und nachfolgend beschrieben, betreffen. Die Nabe ist dazu ausgelegt, um eine Rotationsachse zu rotieren, wobei die Kontaktfläche schräg zur Rotationsachse ausgebildet ist. Vorteilhafterweise verfügt die Nabe darüber hinaus auch noch über einen Radmontagebereich, wobei dieser Radmontagebereich dazu dient, dass an diesem ein Rad mittel- oder unmittelbar montiert ist, insbesondere reversibel, z.B. durch Ausnutzung von Montagelöchern oder Strukturen in dem Radmontagebereich der Nabe. Die Nabe dient dabei dazu, dass an dieser eine Bremsscheibe, insbesondere wie vorhergehend und nachfolgend beschrieben, festgelegt wird. Hierzu verfügt die Radnabe über Kontaktflächen, welche dazu ausgebildet sind, dass an diesen mittel- oder unmittelbar die Anlageflächen einer Bremsscheibe angelegt werden bzw. sind. Die Nabe selber ist dabei wiederum dazu ausgelegt, um eine bzw. die Rotationsachse zu rotieren, wobei die Rotationsachse dabei die bereits vorhergehend beschriebene Rotationsachse in Bezug zu der Bremsscheibe sein kann. Die Nabe dient dazu, die Bremsscheibe mechanisch mit einem Rad zu verbinden, um so das Bremsmoment der Bremsscheibe auf das Rad zu übertragen. Zweckmäßigerweise ist der Montagebereich der Nabe weiter von der Rotationsachse, insbesondere in Radialrichtung, beabstandet, als die Kontaktfläche bzw. als alle Kontaktflächen der Nabe. Hierdurch kann eine besonders sichere Aufnahme bzw. Montage eines Rades an der Nabe erfolgen. Besonders bevorzugt ist darüber hinaus der Montagebereich der Nabe auch in Richtung der Rotationsachse von der oder den Kontaktflächen beabstandet. Vorteilhafterweise liegt der Schwerpunkt der Nabe in Richtung der Rotationsachse zwischen dem Montagebereich und der Anlagefläche oder den Anlageflächen der Nabe. Hierdurch kann eine besonders einfache und sichere Montage derselbigen erfolgen. Vorteilhafterweise ist der Montagebereich als ein Montageflansch ausgebildet. Dieser Montageflansch ist dabei insbesondere durchgehend um die Rotationsachse herum ausgebildet, so dass dieser insbesondere einen kontinuierlichen Montageflansch um die Rotationsachse ausbilden kann. Hierdurch kann eine besonders mechanisch belastbare Struktur erreicht werden. Zweckmäßigerweise sind die Anlageflächen der Nabe dabei Teil einer Rippe bzw. einer Verstärkungsstruktur der Nabe. Vorteilhafter Weise können die Kontaktfläche oder Kontaktflächen der Nabe die Rippen in Richtung der Rotationsachse distal begrenzen. Die Kontaktflächen der Nabe sind dabei schräg zur Rotationsachse ausgebildet. Durch die schräge Ausbildung zumindest einer Kontaktfläche, bevorzugt einer Vielzahl von Kontaktflächen, besonders bevorzugt der überwiegenden Anzahl der Kontaktflächen und besonders stark bevorzugt aller Kontaktflächen, kann auch bei der Nabe eine besonders bauraumsparende Kontaktmöglichkeit mit einer Bremsscheibe geschaffen werden, wobei jedoch weiterhin hohe Kräfte übertragen werden können. Daher kann die dargelegte Nabe insbesondere Einsatz in einem Nutzfahrzeug finden. Eine erfindungsgemäße Nabe kann insbesondere eine Nutzfahrzeugnabe bzw. eine Nutzfahrzeugradnabe sein.

Ein Nutzfahrzeug im Sinne der Erfindung ist insbesondere ein straßentaugliches Fahrzeug, insbesondere zum Transport von Gütern. Alternativ oder zusätzlich bevorzugt kann ein Nutzfahrzeug auch eine zulässige Gesamtmasse von mindestens 3,6 t, bevorzugt von mindestens 7 t, besonders bevorzugt von mindestens 8 t und besonders stark bevorzugt von mindestens 15 t aufweisen. Ein Nutzfahrzeug im Sinne der Erfindung kann insbesondere ein Nutzfahrzeuganhänger, insbesondere ein Sattelauflieger, sein.

Vorteilhafterweise weist die Bremsscheibe und/oder die Nabe eine Montagemarkierung auf. Eine derartige Montagemontierung kann insbesondere eine in Umfangsrichtung um die Rotationsachse herum angeordneter Vorsprung und/oder Rücksprung und/oder eine farbliche Markierung sein. Durch das Vorsehen der Montagemarkierungen an der Bremsscheibe und/oder der Nabe kann in besonders einfacher Weise gekennzeichnet werden, welche relative Position die Bremsscheibe zur Nabe in Umfangsrichtung um die Rotationsachse herum einnehmen muss, um die schräg ausgebildete Anlagefläche und/oder die schräg ausgebildete Kontaktfläche relativ zueinander in eine montagefähige Position zu bringen. In anderen Worten kann die Montagemarkierung auf der Bremsscheibe und/oder der Nabe daher die Montierbarkeit der Bremsscheibe relativ zur Nabe vereinfachen.

Zweckmäßigerweise weist die Bremsscheibe eine Vielzahl von Anlageflächen auf, welche vorteilhafterweise schräg zur Rotationsachse ausgebildet sind und/oder wobei die Nabe eine Vielzahl von Kontaktflächen aufweist, welche vorteilhafterweise schräg zur Rotationsachse ausgebildet sind. Durch das Vorsehen einer Vielzahl von Anlageflächen bzw. von Kontaktflächen kann eine besonders hohe Montagekraftübertragung zwischen der Bremsscheibe und der Nabe stattfinden. Zweckmäßigerweise sind dabei die Kontaktflächen und/oder die Anlageflächen schräg ausgebildet, so dass diese ebenfalls nur einen besonders geringen Bauraumbedarf aufweisen, und gleichzeitig ebenfalls die übertragbare Montagekraft zur Fixierung der Bremsscheibe relativ zur Nabe sicher übertragen können.

Vorteilhafterweise bildet bzw. bilden eine, eine Vielzahl oder alle, Anlageflächen und/oder Kontaktflächen der Bremsscheibe bzw. der Nabe einen Winkel im Bereich von 2° bis 88°, bevorzugt von 25° bis 80°, und besonders bevorzugt 40° bis 75°, mit der Rotationsachse aus. Der Winkel der Kontaktfläche ist dabei insbesondere der Winkel zwischen der nach außen weisenden Flächennormale der Anlagefläche bzw. der Kontaktfläche und der Rotationsachse. Maßgeblich für den hier angegebenen Bereich ist dabei insbesondere der kleinste Winkel, welchen die Flächennormale mit der Rotationsachse ausbildet, insbesondere in allen Schnitteben, welche die Rotationsache beinhalten. Alternativ bevorzugt kann der maßgebliche Winkel auch der gemittelte Winkel der Fläche über aller Schnittebenen und/oder in einer Schnittebene sein. Sollte der Winkel der Anlagefläche bzw. der Kontaktfläche in einem Bereich von 2° bis 88° liegen, so kann hierdurch eine besonders geringe Flächenpressung bei dennoch hohen Montagekräften erreicht werden. Sollte der Winkel jedoch in einem Bereich von 25° bis 80° liegen, so kann hierdurch eine besonders einfache Herstellung der Anlagefläche der Bremsscheibe und/oder der Kontaktfläche der Nabe erreicht werden, insbesondere durch ein spanabhebendes Verfahren, wie Drehen oder Fräsen. Sollte hingegen der Winkel in einem Bereich von 40° bis 75° liegen, so kann hierdurch eine besonders einfache und intuitive Montage der Bremsscheibe an der Nabe erfolgen und eine besonders gute Zentrierwirkung erreicht werden.

Vorteilhafterweise bildet eine, eine Vielzahl und/oder alle, der Anlageflächen der Bremsscheibe und/oder der Kontaktflächen der Nabe einen positiven Winkel mit der Rotationsachse aus. Ein positiver Winkel ist insbesondere dann gegeben, wenn die nach außen weisende Normale der jeweiligen Fläche von der Rotationsachse weg weist, bzw. vom Schwerpunkt der Bremsscheibe bzw. der Nabe, je nachdem, ob die maßgebliche Fläche eine Anlagefläche oder eine Kontaktfläche ist. Die obig dargelegte Ausgestaltung im Hinblick auf den positiven Winkel der zumindest einen Anlagefläche der Bremsscheibe bzw. der zumindestens einen Kontaktfläche der Nabe erreicht eine besonders einfache und schnelle Montierbarkeit der Bremsscheibe bzw. der Nabe.

Vorteilhafterweise bildet eine, eine Vielzahl und/oder alle, der Anlageflächen der Bremsscheibe und/oder der Kontaktflächen der Nabe einen negativen Winkel mit der Rotationsachse aus. Ein negativer Winkel ist insbesondere dann gegeben, wenn die nach außen weisende Normale der jeweiligen Fläche in Richtung zu der Rotationsachse weist, bzw. zum Schwerpunkt der Bremsscheibe bzw. der Nabe weisen, je nachdem, ob die maßgebliche Fläche eine Anlagefläche oder eine Kontaktfläche ist. Die obig dargelegte Ausgestaltung im Hinblick auf den negativen Winkel der zumindest einen Anlagefläche der Bremsscheibe bzw. der zumindestens einen Kontaktfläche der Nabe erreicht eine besonders gute Zentrierwirkung.

Vorteilhafterweise ist eine Anlagefläche, bevorzugt eine Vielzahl oder alle, der Anlageflächen und/oder eine Kontaktfläche, bevorzugt eine Vielzahl oder alle der Kontaktflächen, als Kegelmantelfläche oder Kegelsegmentfläche um die Rotationsachse ausgebildet. Eine Kegelmantelfläche ist insbesondere eine Fläche, die durch eine gedachte vollständige Umdrehung einer Außenkontur um die Rotationsachse erhalten wird. Eine Kegelsegmentfläche ist hingegen eine Fläche, die durch eine gedachte teilweise Umdrehung einer Außenkontur um die Rotationsachse erhalten wird. Die Außenkontur, welche zum Erhalt der Kegelmantelfläche oder der Kegelsegmentmantelfläche um die Rotationsachse (gedacht) rotiert wird, ist zweckmäßigerweise eine Gerade. Die Herstellung einer Kegelmantelfläche oder einer Kegelmantelsegmentfläche kann dabei besonders einfach erfolgen, so dass hierdurch eine besonders kostengünstige Bremsscheibe und/oder Nabe resultiert. Darüber hinaus kann durch die Ausbildung einer Kegelmantelfläche auch eine besonders gute Zentrierwirkung erreicht werden, denn durch den Kontakt der Anlagefläche mit der Kontaktfläche kann hierdurch eine Zentrierung auf bzw. um die Rotationsachse in einfacher Weise erreicht werden.

Vorteilhafterweise ist eine, eine Vielzahl oder alle Anlagefläche(n) und/oder eine, eine Vielzahl oder alle Kontaktfläche(n) eben ausgebildet. Hierdurch kann eine besonders einfache und intuitive Montage erfolgen. Insbesondere ist dabei eine visuelle Überprüfung der ordnungsgemäßen Positionierung der Bremsscheibe in Relation zur Nabe durch die Ebene ausgestaltete Anlagefläche und/oder der Kontaktfläche besonders einfach möglich, so dass durch diese Art der Ausgestaltung Montagefehler der Bremsscheibe in Relation zur Nabe besonders effektiv verhindert werden können.

In einer vorteilhaften Ausführungsform liegen einige, bevorzugt alle der ebenen Anlageflächen oder der ebenen Kontaktflächen in einer Ebene. Hierdurch kann eine besonders einfache Herstellung der ebenen Anlageflächen und/oder der ebenen Kontaktflächen erfolgen. Besonders zweckmäßig ist es dabei, wenn alle ebenen Anlageflächen der Bremsscheibe und/oder alle ebenen Kontaktflächen der Nabe in einer Ebene liegen.

Alternativ oder zusätzlich bevorzugt liegen zumindest einige, bevorzugt alle, ebenen Anlageflächen und/oder ebenen Kontaktflächen in verschiedenen Ebenen. Diese Ebenen können dabei in Richtung der Rotationsachse und/oder in Radialrichtung, welche auch als radiale Richtung bezeichnet werden kann, distanziert voneinander. Durch die Ausbildung dahingehend, dass die ebenen Anlageflächen und/oder Kontaktflächen in verschiedenen Ebenen liegen, kann eine besonders einfache und sichere Montage erfolgen, denn visuell kann in besonders einfacher Weise festgestellt werden, dass kein Kontakt bzw. keine Kraftübertragung zwischen verschiedenen Anlageflächen und/oder Kontaktflächen vorliegt. Somit kann durch eine derartige Ausgestaltung ein Montagefehler in effektiver Weise visuell schnell erkannt werden. Vorteilhafterweise stehen die Anlageflächen und/oder Kontaktflächen, welche in verschiedenen Ebenen liegen, derart zueinander, dass die jeweiligen Ebenen teilweise schräg und/oder parallel zueinander orientiert sind. Hierdurch kann ebenfalls ein hohes Maß an Zentrierwirkung erreicht werden, insbesondere, wenn die Ebenen relativ zueinander schräg orientiert sind. Hierdurch kann ebenfalls ein hohes Maß an Zentrierwirkung erreicht werden, insbesondere, wenn die Ebenen relativ zueinander schräg orientiert sind. Sollten die Ebenen jedoch parallel zueinander sein, so kann hierdurch die Fertigung der unterschiedlichen Ebenen vereinfacht werden, so dass eine kostengünstige Herstellung der Bremsscheibe und/oder der Nabe erfolgen kann.

Vorteilhafterweise weisen eine Vielzahl oder alle Anlagenflächen den gleichen Abstand in Radialrichtung und/oder in Richtung der Rotationsachse vom Schwerpunkt der Bremsscheibe auf und/oder wobei eine Vielzahl oder alle Kontaktflächen den gleichen Abstand in Radialrichtung und/oder in Richtung der Rotationsachse vom Schwerpunkt der Nabe aufweisen. Durch den gleichen Abstand kann eine besonders einfache Montage erfolgen. Der Abstand der jeweiligen Anlagefläche bzw. der Kontaktfläche zum Schwerpunkt der Bremsscheibe bzw. zum Schwerpunkt der Nabe bestimmt sich insbesondere durch den minimalsten Abstand der jeweiligen Fläche zum jeweiligen Schwerpunkt oder durch den Flächenschwerpunkt der jeweiligen Fläche zu dem Schwerpunkt der Bremsscheibe bzw. der Nabe. Die Radialrichtung und die Rotationsachse stehen dabei insbesondere senkrecht zueinander, wobei die Radialrichtung somit insbesondere radial weg weisend von der Rotationsachse ist.

Vorteilhafterweise weist/weisen die eine Anlagefläche, eine Vielzahl der Anlageflächen oder alle Anlageflächen eine Montagestruktur, insbesondere eine Montageöffnung für ein Montageelement, insbesondere eine Schraube, einen Stift, einen Bolzen und/oder eine Vorsprung, auf und/oder wobei die eine Kontaktfläche eine Vielzahl der Kontaktflächen oder alle Kontaktflächen eine Montagestruktur, insbesondere eine Montageöffnung für ein Montageelement, insbesondere eine Schraube, einen Stift, einen Bolzen und/oder eine Vorsprung, aufweisen. Diese Montagestruktur dient dabei dazu, ein Montageelement, insbesondere eine Schraube, einen Stift, einen Vorsprung oder einen Bolzen, aufnehmen zu können. Das Montageelement selber kann dabei insbesondere ebenfalls Teil der Erfindung darstellen. Alternativ oder zusätzlich kann es vorgesehen sein, dass die eine Anlagefläche, eine Vielzahl der Anlageflächen oder alle Anlageflächen zumindest ein Montageelement, insbesondere zumindest eine Schraube, zumindest einen Stift, zumindest ein Bolzen und/oder zumindest eine Vorsprung, insbesondere passend zu zumindest einer Montagestruktur, aufweist bzw. aufweisen und/oder dass die eine Kontaktfläche, eine Vielzahl der Kontaktflächen oder alle Kontaktflächen zumindest ein Montageelement, insbesondere zumindest eine Schraube, zumindest einen Stift, zumindest einen Bolzen und/oder zumindest eine Vorsprung, insbesondere pasend zu zumindest einer Montagestruktur, aufweist bzw. aufweisen. Die Montagestruktur ist vorteilhafterweise eine weiblich ausgebildete Montagestruktur, wobei innerhalb der Montagestruktur der Anlageflächen und/oder der Kontaktflächen ein Gewinde ausgebildet sein kann. Alternativ bevorzugt kann die Montagestruktur - entweder der Bremsscheibe und/oder der Nabe bzw. der Anlagefläche und/oder der Kontaktfläche - auch eine Durchgangsöffnung sein. Zweckmäßigerweise ist die Montagestruktur derart ausgebildet, dass diese eine Schraube oder einen Bolzen mit einem Durchmesser von zumindest 6 mm, bevorzugt von zumindest 10 mm und besonders bevorzugt von zumindest 12 mm, aufnehmen und/oder mit diesem verbunden werden kann. Vorteilhafterweise erstreckt sich die Montagestruktur parallel oder zumindest im Wesentlichen parallel zur Rotationsachse. Hierdurch kann eine besonders einfache Fertigung der Montagestrukturen erreicht werden. Unter einem im Wesentlichen parallel ist dabei zu verstehen, dass die maßgeblichen Richtungen einen kleineren Winkel zueinander ausbilden, welcher maximal 10°, bevorzugt maximal 5°, besonders bevorzugt maximal 3° und besonders stark bevorzugt maximal 1° zueinander aufweisen dürfen. Alternativ kann die Montagestruktur geneigt zu der Rotationsachse verlaufen. Die Neigung der Montagestruktur zu der Rotationsachse kann insbesondere im Bereich von 1° bis 40°, bevorzugt 3° bis 25°, besonders bevorzugt von 5° bis 20° liegen. Durch die Ausbildung dahingehend, dass die Anlageflächen eine Montagestruktur und/oder die Kontaktflächen einer Montagestruktur aufweisen, kann eine besonders gute Montagekraftverteilung auf der Kontaktfläche und/oder der Anlagefläche erreicht werden. Zweckmäßigerweise umschließen damit die Anlageflächen und/oder die Kontaktflächen die Montagestrukturen bzw. bilden die Montagestrukturen eine in sich selbst geschlossene Kontur auf der Oberfläche der Anlagefläche bzw. der Kontaktfläche aus.

Vorteilhafterweise können die Montagestrukturen und/oder die Montageelemente der Anlageflächen und/oder der Kontaktflächen vorstehende Stifte oder Vorsprünge und/oder Ausnehmungen sein. Insbesondere kann es vorgesehen sein, dass eine aus Anlagefläche und Kontaktfläche, bevorzugt die Kontaktfläche, Stifte umfasst und die andere aus Anlagefläche und Kontaktfläche, bevorzugt die Anlagefläche, dazu komplementäre Ausnehmungen umfasst. Die Stifte und/oder die Ausnehmungen können uneinheitlich ausgebildet sein. Beispielsweise können die Stifte und/oder die Ausnehmungen hinsichtlich ihrer Erstreckung in Axialrichtung und/oder hinsichtlich ihres Durchmessers, insbesondere bemessen senkrecht zu der Axialrichtung, uneinheitlich sein. Uneinheitlich kann dabei insbesondere bedeuten, dass zumindest eine der Stifte uneinheitlich zu zumindest einem weiteren Stift ausgebildet ist. Beispielsweise können mehrere erste Stifte einheitlich zueinander sein, wobei aber zumindest ein weiterer Stift uneinheitlich zu diesen ersten Stiften ausgebildet ist. Mit anderen Worten kann das Vorhandensein eines Stifts, der nicht einheitlich zu jedem weiteren Stift ist, genügen, um die Gesamtheit der Stifte als uneinheitlich zueinander zu definieren. "Uneinheitlich" kann dabei beispielsweise bedeuten, dass die Form bzw. Gestalt eines Stifts unterschiedlich zu der Form bzw. Gestalt eines weiteren Stifts ist. Zumindest ein erster Stift kann einen anderen Durchmesser aufweisen als zumindest ein zweiter Stift. Zusätzlich oder alternativ kann der zumindest eine erste Stift eine andere Erstreckung in Axialrichtung aufweisen als der zumindest eine zweite Stift. Alternativ oder zusätzlich kann "uneinheitlich" über die Positionierung der Stifte definiert sein. Zumindest zwei Montagestrukturen können sich beispielsweise hinsichtlich einer Axialposition und/oder einer Radialposition unterscheiden. Die Stifte können beispielsweise in, insbesondere mit Schraubengewinde versehenen, Bohrungen fixiert sein. Die Stifte können Einkerbungen umfassen. Die Einkerbungen verschiedener Stifte können uneinheitlich ausgebildet sein. Die Ausnehmungen können zu den Einkerbungen entsprechende Vorsprünge aufweisen.

Vorteilhafterweise sind die zumindest eine Montagestruktur, insbesondere die Montagestrukturen, und/oder das zumindest eine Montageelement, insbesondere die Montageelemente, geneigt zu der Rotationsachse ausgerichtet. Die geneigten Montageelemente können beispielsweise geneigte Schrauben sein. Die geneigten Montageelemente können beispielsweise geneigte Bolzen sein. Geneigte Montageelemente bzw. Montagestrukturen können eine stabilere und verbesserte Positionierung und Fixierung der Bremsscheibe ermöglichen. Der Lagerbereich der Nabe in der radialen Richtung kann durch die geneigten Montageelemente bzw. Montagestrukturen verstärkt werden. Insbesondere kann einer Ausweitung des Lagersitzes entgegengewirkt werden. Durch die Neigung kann eine radiale und axiale Vorspannung eine effektivere Übertragung eines Brems-Drehmoments ermöglichen. Weiterhin kann gegebenenfalls eine bessere Zentrierung der Bremsscheibe erzielbar sein. Es hat sich gezeigt, dass eine Herstellung von geneigten Montageelemente bzw. Montagestrukturen relativ leicht umsetzbar sein kann. Insbesondere kann eine Herstellung durch ein einfaches Drehen entsprechend verwendeter Herstellungswerkzeuge erzielt werden. In Zusammenwirkung mit der Neigung der geneigten Anlagefläche und/oder geneigten Kontaktfläche kann zudem einem Verrutschen der Bremsscheibe entgegengewirkt werden und eine Stabilität der Bremsscheibe beim Bremsen kann erhöht werden. Dabei können die geneigten Flächen zusammen mit den geneigten Montagestrukturen bzw. Montageelementen das Sitzen der Bremsscheibe an der Radnabe durch eine erhöhte Radialkraft stabilisieren. Auch eine Montage kann gegebenenfalls durch eine durch die Neigung breiteren Zugangswinkel einfacher möglich sein. Unter einer geneigten Ausrichtung ist insbesondere zu verstehen, dass die Längsrichtung der Montageelemente, insbesondere Schrauben oder Bolzen, ungleich 0°, 90° und 180° zu der Rotationsachse orientiert ausgebildet ist. Eine Neigung kann in radialer Richtung und/oder in tangentialer Richtung vorgesehen sein. Gemäß einer Ausführungsform können die Montageelemente einen Winkel im Bereich von 1° bis 70°, bevorzugt von 2° bis 40°, und besonders bevorzugt 5° bis 20°, mit der Rotationsachse ausbilden. Beispielsweise kann eine Nabe geneigte Montageelemente umfassen und eine Bremsscheibe kann dazu passend geneigte Montagestrukturen umfassen.

Ein weiterer Aspekt der Erfindung kann ein System betreffen, wobei das System eine Bremsscheibe, insbesondere wir vorgehend und/oder nachfolgend beschrieben, und eine Nabe, insbesondere wie vorhergehend und/oder nachfolgend beschrieben, aufweist. Hierdurch können die bereits obig dargelegten Vorteile und/oder Ausgestaltungen und/oder Merkmale in einem System realisiert werden.

Zweckmäßigerweise kann ein weiterer Aspekt der Erfindung ein System mit einer, insbesondere wie vorhergehend und/oder nachfolgend dargelegten, Bremsscheibe und/oder eine Nabe, insbesondere wie vorhergehend oder nachfolgend beschrieben, betreffen, wobei zumindest eine Anlagefläche der Bremsscheibe eine Kontaktfläche der Nabe kontaktiert, wobei diese kontaktierenden Anlagefläche und Kontaktfläche schräg zur Rotationsachse ausgebildet sind, wobei der Winkel der Anlagefläche insbesondere kleiner oder größer ist als der Winkel der Kontaktfläche. Hierdurch kann eine besonders gute Federwirkung erreicht werden, so dass eine besonders gute Flächenkraftverteilung auf der kontaktierenden Anlagefläche mit der Kontaktfläche erreicht wird. Gemäß einer Alternative kann der Winkel der Anlagefläche gleich groß wie der Winkel der Kontaktfläche sein.

Vorteilhafterweise kontaktieren eine Vielzahl der Anlageflächen der Bremsscheibe jeweilige Kontaktflächen auf der Nabe und umgekehrt. Besonders bevorzugt kontaktieren alle Anlageflächen jeweils eine Kontaktfläche oder umgekehrt, wobei der Winkel der sich kontaktierenden Flächen (Anlageflächen bzw. Kontaktflächen) unterschiedlich sein kann, so dass der Winkel der jeweils kontaktierenden Anlagefläche kleiner oder größer als der Winkel der Kontaktfläche sein kann. Hierdurch kann eine besonders homogene Flächenkraftverteilung in den Kontaktbereichen erreicht werden, so dass eine Überbeanspruchung der jeweiligen Flächen reduziert und/oder verhindert werden kann.

Weitere Vorteile und Merkmale ergeben sich aus der nachfolgenden Beschreibung bevorzugter Ausführungsformen der erfindungsgemäßen Vorrichtungen mit Bezug auf die beigefügten Figuren. Es versteht sich, dass einzelne Merkmale der verschiedenen gezeigten Ausführungsformen im Rahmen der Erfindung miteinander kombiniert werden können. Es zeigen:
- **Fig. 1**: eine Ansicht einer Nabe in Richtung Rotationsachse A,
- **Fig. 2**: eine Seitenansicht einer Nabe,
- **Fig. 3**: eine Seitenansicht einer Bremsscheibe,
- **Fig. 4**: eine alternative Ausgestaltung einer Nabe,
- **Fig. 5**: eine alternative Ausgestaltung einer Bremsscheibe,
- **Fig. 6**: eine Kombination aus einer Nabe und einer Bremsscheibe,
- **Fig. 7**: eine weitere Kombination aus einer Nabe und einer Bremsscheibe.

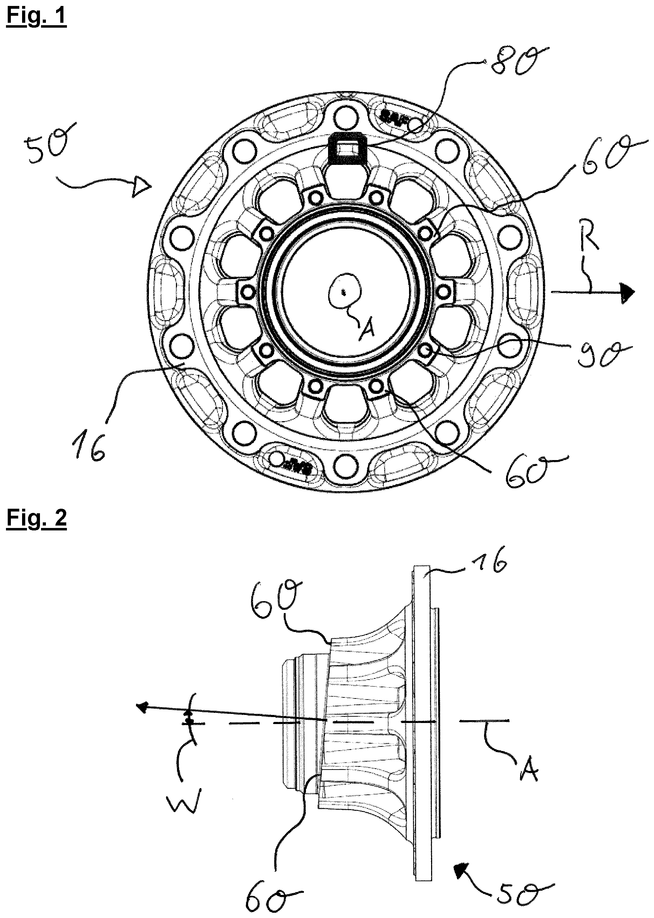

In **Figur 1** ist eine Nabe 50, welche eine Nutzfahrzeugradnabe ist, erkennbar. Die Nabe 50 verfügt über eine Montagemarkierung 80 sowie über eine Vielzahl von Kontaktflächen 60. Jede dieser Kontaktflächen 60 dabei über eine Montagestruktur 90 in Form einer Montageöffnung für eine Schraube. Die Nabe 50 ist dazu ausgelegt, um die Rotationsachse A zu rotieren. In Richtung der Rotationsachse A beabstandet von den Kontaktflächen 60 ist der die Nabe 50 in Radialrichtung R berandende Montagebereich 16. Der Montagebereich 16 verfügt ebenfalls über Montageöffnungen für Schrauben, so dass ein Rad in einfacher Weise an den Montagebereich 16 festgelegt werden kann.

In **Figur 2** ist eine Ausgestaltung einer Nabe 50 gezeigt, welche ebenfalls eine Vielzahl von Kontaktflächen 60 aufweist. die Kontaktflächen 60 sind dabei derart ausgebildet, dass alle Kontaktflächen 60 der Nabe 50 in einer Ebene liegen. Die Ebene, in welcher die Kontaktflächen 60 liegen, ist dabei schräg ausgebildet, wobei die Kontaktflächen 60 einen positiven Winkel mit der Rotationsachse ausbilden, denn diese weist vom Schwerpunkt der Nabe 50 weg. Die Kontaktflächen 60 bilden dabei einen Winkel W mit der Rotationsachse A aus.

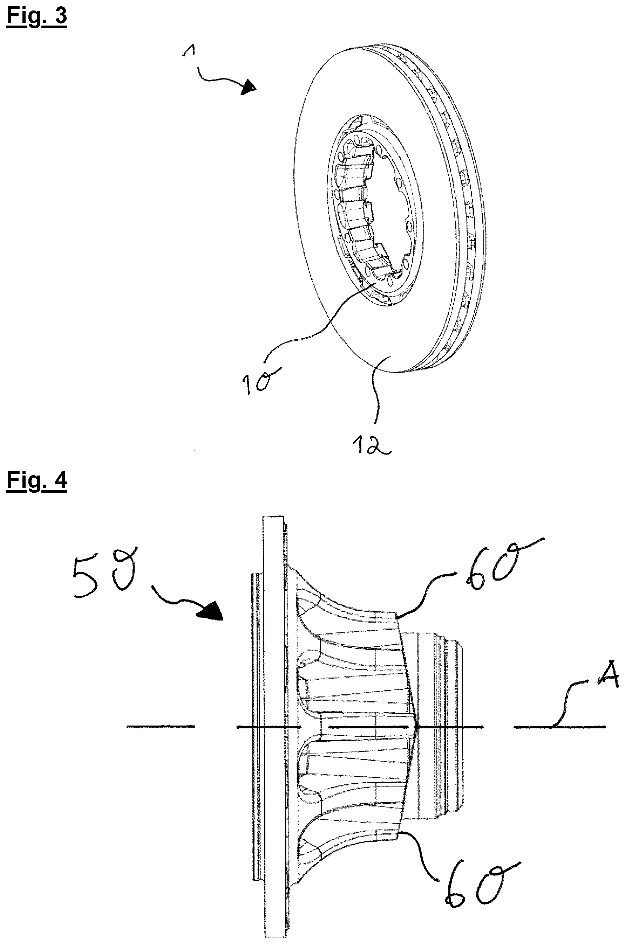

In **Figur 3** ist eine Ausgestaltung einer Bremsscheibe 1 gezeigt, welche zu der Nabe 50 in der Figur 2 passen kann. Die Bremsscheibe 1 verfügt über zwei Reibflächen 12, wobei nur eine dieser in Figur 3 zu sehen ist. Diese Reibflächen weisen eine Normale parallel zur Rotationsachse A auf. Die Bremsscheibe 1 verfügt auch über eine ringförmige Anlagefläche 10.

In **Figur 4** ist eine ähnliche Ausgestaltung einer Nabe 50 gezeigt, wie sie bereits in der Figur 2 dargestellt ist. Abweichend zu der in der Figur 2 dargestellten Ausbildung ist jedoch, dass die Kontaktflächen 60 in zwei unterschiedlichen Ebenen orientiert sind bzw. angeordnet sind, wobei diese Ebenen schräg zueinander ausgebildet sind.

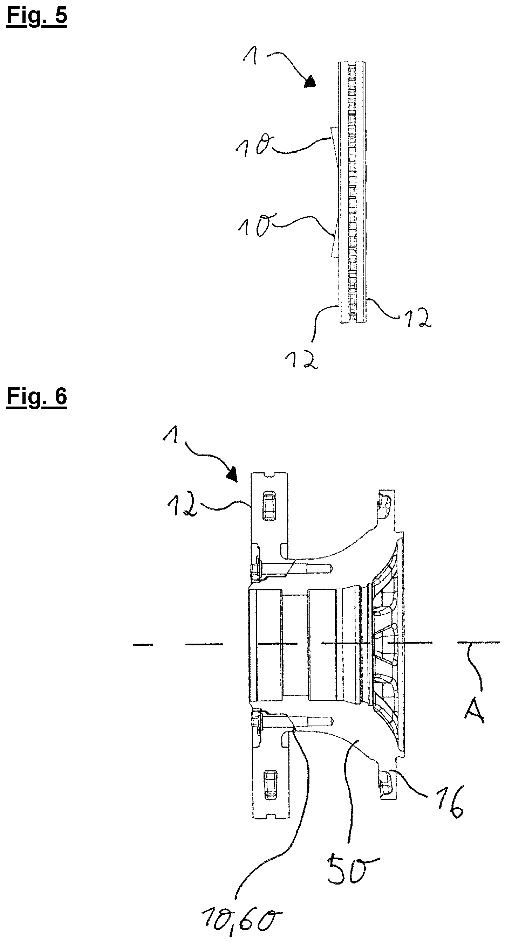

In **Figur 5** ist eine Ausgestaltung einer Bremsscheibe 1 gezeigt, welche zu der Nabe 50 in der Figur 4 passen kann. Die Bremsscheibe 1 verfügt über zwei Reibflächen 12, welche jeweils eine Normale parallel zur Rotationsachse A aufweisen. Die Bremsscheibe 1 verfügt auch über zwei Anlageflächen 10.

In **Figur 6** ist eine alternative Ausführungsform einer Nabe 50 und einer mit dieser verbundenen Bremsscheibe 1 gezeigt, wobei die Nabe 50 über eine Vielzahl von Kontaktflächen 60 verfügt, welche einen positiven Winkel mit der Rotationsachse A ausbilden. Darüber hinaus sind die Kontaktflächen 60 auch als Kegelsegmentmantelflächen um die Rotationsachse A ausgebildet. Die Kontaktflächen 60 kontaktieren dabei jeweils die oder eine der Anlagefläche 10 der Bremsscheibe 1. Die Bremsscheibe 1 ist über Schrauben oder alternativ über andere Spannmittel mit der Nabe 50 verspannt.

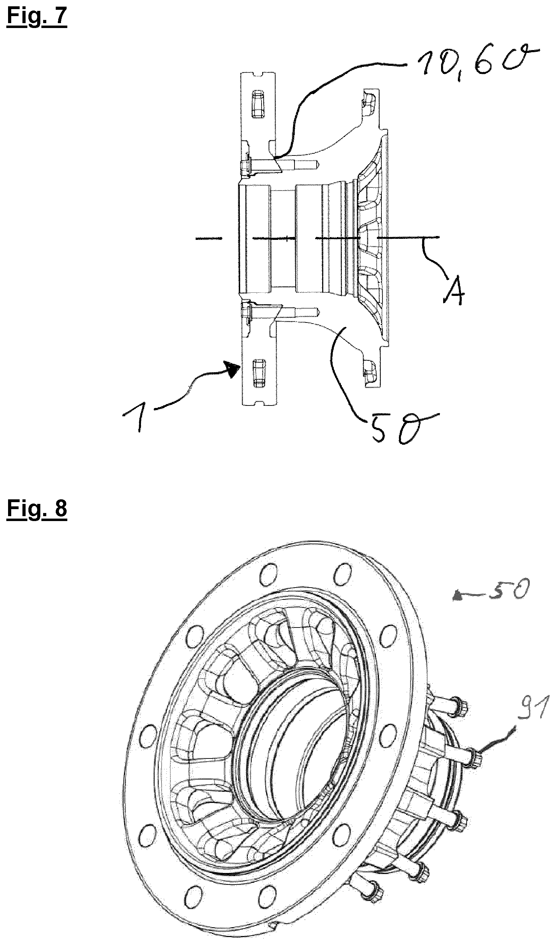

In der **Figur 7** ist eine ähnliche Ausgestaltung zu der in der Figur 6 dargestellten Ausgestaltung gezeigt. Die Kontaktflächen 60 sind ebenfalls als Kegelsegmentmantelflächen um die Rotationsachse A ausgebildet, wobei diese einen negativen Winkel mit er Rotationsachse A bilden. Die Kontaktflächen 60 kontaktieren jeweils die oder eine der Anlagefläche 10 der Bremsscheibe 1. Die Bremsscheibe 1 ist über Schrauben oder alternativ über andere Spannmittel mit der Nabe 50 verspannt.

In **Figur 8** ist eine Ausgestaltung einer Nabe 50 gezeigt, welche Montageelemente 91 aufweist die geneigt zu der Rotationsachse ausgerichtet sind. Die geneigten Montageelemente 91 sind hier beispielhaft geneigte Schrauben. Die Ausgestaltung der Nabe 50 kann ansonsten analog zu derjenigen in den anderen Figuren 1, 2, 4, 6, oder 7 sein.

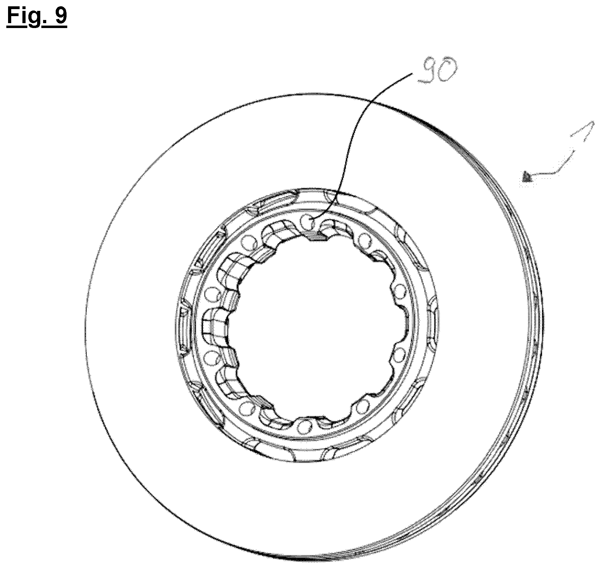

In **Figur 9** ist eine Ausgestaltung einer Bremsscheibe 1 gezeigt, welche zu der Nabe 50 in der Figur 8 passen kann. Die Bremsscheibe 1 verfügt über Montagestrukturen 90, die geneigt zu der Rotationsachse ausgerichtet sind. Die Ausgestaltung der Bremsscheibe 1 kann ansonsten analog zu derjenigen in den anderen Figuren 3 oder 5 sein.

### Bezugszeichenliste:

- 1: - Bremsscheibe
- 10: - Anlagefläche
- 12: - Reibfläche
- 16: - Montagebereich
- 50: - Nabe
- 60: - Kontaktfläche
- 80: - Montagemarkierung
- 90: - Montagestruktur
- 91: - Montageelement
- A: - Rotationsachse
- R: - Radialrichtung
- W: - Winkel

## Patentansprüche

1. Bremsscheibe (1), insbesondere Bremsscheibe für ein Nutzfahrzeug, umfassend eine Anlagefläche (10) und eine Reibfläche (12),
wobei die Bremsscheibe (1) dazu ausgelegt ist, um eine Rotationsachse (A) zu rotieren,
wobei die Anlagefläche (10) schräg zur Rotationsachse (A) ausgebildet ist.

2. Nabe (50), insbesondere Radnabe, umfassend eine Kontaktfläche (60) zur Anlage einer Bremsscheibe (1), insbesondere nach Anspruch 1,
wobei die Nabe (50) dazu ausgelegt ist, um eine Rotationsachse (A) zu rotieren,
wobei die Kontaktfläche (60) schräg zur Rotationsachse (A) ausgebildet ist.

3. Bremsscheibe (1) gemäß Anspruch 1 und/oder Nabe (50) gemäß Anspruch 2,
wobei die Bremsscheibe (1) und/oder die Nabe (50) eine Montagemarkierung (80) aufweist/aufweisen.

4. Bremsscheibe (1) und/oder Nabe (50) gemäß einem der vorhergehenden Ansprüche,
wobei die Bremsscheibe (1) eine Vielzahl von Anlageflächen (10) aufweist, welche schräg zur Rotationsachse (A) ausgebildet sind, und/oder
wobei die Nabe (50) eine Vielzahl von Kontaktflächen (60) aufweist, welche schräg zur Rotationsachse (A) ausgebildet sind.

5. Bremsscheibe (1) und/oder Nabe (50) gemäß einem der vorhergehenden Ansprüche,
wobei eine, eine Vielzahl oder alle, Anlageflächen (10) und/oder Kontaktflächen (60) einen Winkel (W) im Bereich von 3° bis 70°, bevorzugt von 15° bis 60°, und besonders bevorzugt von 25° bis 50°, mit der Rotationsachse (A) ausbilden.

6. Bremsscheibe (1) und/oder Nabe (50) gemäß einem der vorhergehenden Ansprüche,
wobei eine, eine Vielzahl oder alle, Anlageflächen (10) und/oder Kontaktflächen (60) einen positiven Winkel mit der Rotationsachse (A) ausbilden.

7. Bremsscheibe (1) und/oder Nabe (50) gemäß einem der vorhergehenden Ansprüche,
wobei eine, eine Vielzahl oder alle, Anlageflächen (10) und/oder Kontaktflächen (60) einen negativen Winkel mit der Rotationsachse (A) ausbilden.

8. Bremsscheibe (1) und/oder Nabe (50) gemäß einem der vorhergehenden Ansprüche,
wobei eine, eine Vielzahl oder alle, Anlageflächen (10) und/oder Kontaktflächen (60) als Kegelmantelfläche oder Kegelsegmentmantelfläche um die Rotationsachse (A) ausgebildet sind.

9. Bremsscheibe (1) und/oder Nabe (50) gemäß einem der vorhergehenden Ansprüche,
wobei eine, eine Vielzahl oder alle, Anlageflächen (10) und/oder Kontaktflächen (60) eben ausgebildet sind.

10. Bremsscheibe (1) und/oder Nabe (50) gemäß Anspruch 9,
wobei einige, bevorzugt alle, der ebenen Anlageflächen (10) und/oder der ebenen Kontaktflächen (60) in einer Ebene liegen und/oder
wobei zumindest einige, bevorzugt alle, ebenen Anlageflächen (10) und/oder ebenen Kontaktflächen (60) in verschiedenen Ebenen liegen.

11. Bremsscheibe (1) und/oder Nabe (50) gemäß einem der vorhergehenden Ansprüche,
wobei eine Vielzahl oder alle Anlagenflächen (10) den gleichen Abstand in Radialrichtung (R) und/oder in Richtung der Rotationsachse (A) vom Schwerpunkt der Bremsscheibe (1) aufweisen und/oder
wobei eine Vielzahl oder alle Kontaktflächen (60) den gleichen Abstand in Radialrichtung (R) und/oder in Richtung der Rotationsachse (A) vom Schwerpunkt der Nabe (50) aufweisen.

12. Bremsscheibe (1) und/oder Nabe (50) gemäß einem der vorhergehenden Ansprüche,
wobei die eine Anlagefläche (10), eine Vielzahl der Anlageflächen (10) oder alle Anlageflächen (10) zumindest eine Montagestruktur (90), insbesondere zumindest eine Montageöffnung und/oder zumindest eine Ausnehmung, insbesondere für zumindest ein Montageelement (91), aufweist bzw. aufweisen und/oder
wobei die eine Kontaktfläche (60), eine Vielzahl der Kontaktflächen (60) oder alle Kontaktflächen (60) zumindest eine Montagestruktur (90), insbesondere zumindest eine Montageöffnung und/oder zumindest eine Ausnehmung, insbesondere für zumindest ein Montageelement (91), aufweist bzw. aufweisen.

13. Bremsscheibe (1) und/oder Nabe (50) gemäß einem der vorhergehenden Ansprüche,
wobei die eine Anlagefläche (10), eine Vielzahl der Anlageflächen (10) oder alle Anlageflächen (10) zumindest ein Montageelement (91), insbesondere zumindest eine Schraube, zumindest einen Stift, zumindest ein Bolzen und/oder zumindest eine Vorsprung, insbesondere passend zu zumindest einer Montagestruktur (90), aufweist bzw. aufweisen und/oder
wobei die eine Kontaktfläche (60), eine Vielzahl der Kontaktflächen (60) oder alle Kontaktflächen (60) zumindest ein Montageelement (91), insbesondere zumindest eine Schraube, zumindest einen Stift, zumindest einen zumindest ein Bolzen und/oder zumindest eine Vorsprung, insbesondere passend zu zumindest einer Montagestruktur (90), aufweist bzw. aufweisen.

14. Bremsscheibe (1) und/oder Nabe (50) gemäß einem der Ansprüche 12 oder 13,
wobei die zumindest eine Montagestruktur (90) und/oder das zumindest eine Montageelement (91) geneigt zu der Rotationsachse (A) ausgerichtet ist/sind.

15. System umfassend eine Bremsscheibe (1) gemäß einem der vorhergehenden Ansprüche und/oder einer Nabe (50) gemäß einem der vorhergehenden Ansprüche.
